Europäisches Patentamt

European Patent Office

Office européen des brevets

(19)

(11) Publication number: **0 302 545 B1**

# EUROPEAN PATENT SPECIFICATION

(45) Date of publication of patent specification: **13.05.92** (51) Int. Cl.⁵: **C02F 3/30**

(21) Application number: **88201522.5**

(22) Date of filing: **15.07.88**

(54) Process for the biological purification of waste waters.

(30) Priority: **07.08.87 IT 2161887**

(43) Date of publication of application:
**08.02.89 Bulletin 89/06**

(45) Publication of the grant of the patent:
**13.05.92 Bulletin 92/20**

(84) Designated Contracting States:
**AT BE CH DE ES FR GB GR IT LI LU NL SE**

(56) References cited:
**EP-A- 0 025 309**
**EP-A- 0 090 450**
**GB-A- 2 167 055**

**KORRESPONDENZ ABWASSER, vol. 33, no.
10, 1986, pages 877-893, GFA, St. Augustin,
DE; C.F. SEYFRIED et al.: "Verfahren der an-
aeroben Reinigung von Industrieabwässern"**

**BIOTECHNOLOGY AND BIOENGINEERING,
vol. 26, September 1984, pages 1054-1065, J.
Wiley & Sons Inc.; M.A.BULL et al.: "An eval-
uation of single-and separated-phase an-
aerobic industrial wastewater treatment in
fluidized bed reactors"**

**BIOTECHNOLOGY AND BIOENGINEERING,
vol. 25, no. 7, July 1983, pages 1701-1723, J.
Wiley & Sons Inc.: G. LETTINGA et al.:
"Anaerobic treatment of raw domestic
sewage at ambient temperatures using a
granular bed UASB reactor"**

(73) Proprietor: **SNAMPROGETTI S.p.A.**
**Corso Venezia 16**
**I-20121 Milan(IT)**

(72) Inventor: **Lagana', Vincenzo**
**Via Simondi 43**
**I-20133 Milan(IT)**
Inventor: **Farneti, Angiolo**
**Via Acacie 10**
**I-61032 Fano Pesaro(IT)**
Inventor: **Bassetti, Angelo**
**Via Borgometauro 84**
**I-61032 Fano Pesaro(IT)**

(74) Representative: **Roggero, Sergio et al**
**Ing. Barzanò & Zanardo Milano S.p.A. Via
Borgonuovo 10**
**I-20121 Milano(IT)**

**Description**

This invention relates to a process for treating low strength wastewaters, of both municipal and industrial origin: such wastewaters contain organic and inorganic pollutants as well, together with nutrients, the so called eutrophics, which are adapted to stimulate the growth of undesirable vegetable species.

An objective of the invention is thus to produce a reduced amount of muds, which are acceptable according to the official regulations and contain little eutrophics.

The most commonly used treatments are aerobic biological treatments which use active sludges.

Generally speaking, the waste waters are initially stripped of solids such as sand and of oil and then subjected to a preliminary settling, whereafter the active sludges are allowed to act upon the pollutants, the result being the formation of other sludges.

Aerobic treatments, though capable of removing organic substances in solution or in suspension, and a fraction of nitrogen or phosphorus, have the drawback of producing large volumes of sludges which may contain, in addition to the fermentable biomass generated by the treatments, undesirable substances such as seeds of infesting plants, pathogenic organisms, heavy metals.

Aerobic processes, therefore, transfer the pollution from the wastewaters to the produced muds, the disposal of which is imperative: for these muds, to be usable in agriculture, stabilization, sterilization, dehydration, and like expensive treatments are required, but the effluent is still rich with phosphorus. To remove phosphorus, further treatments are necessary, which add to the cost and contribute towards sludge production.

Summing up, a conventional aerobic process oxidizes about 50% of the carbon which is present in the wastewater, the balance of the carbon contributing towards the formation of sludges.

Representative of the prior art is an article appeared on pages 1701-1723 of Biotechnology and Bioengineering, Vol.25 (July 1983), N°7, proposing, for the anaerobic treatment, a granular bed with culturing substrates, such as sugar juices or dairy residues: however, a seed fermentor is required to hold the granular bed and this treatment is unsuitable for low-strength wastewaters, due to the difficulty of maintaining an efficient sludge bed in the interior of the fermentor under psychrophylic conditions.

Another approach is GB-A-2 167 055, which relates to a process comprising an initial anaerobic degradation in a lagoon by the agency of a mixed culture including methanogens, a conversion step using methanogens again on an anaerobic filter, and a final aerobic polishing treatment: also this process is unsuitable for low strength wastewaters as it refers to liquors having a BOD of 6.000 mg/litre.

Another representative document is Korrespondenz Abwasser, Vol.33, N°10, (1986), pages 877-893, GFA, St.Augustin, DE, C.F.Seyfried et al.:"Verfahren der anaeroben Reinigung von Industrieabwässern", which relates, once again, to concentrated wastewaters, such as residues of starch and sugar processing, and adopts mesophylic, rather than psychrophylic conditions: furthermore, bacterial species are required, which are incapable of removing nitrogen or phosphorus.

The present invention, with a view to offsetting the drawbacks of the prior art processes, aims to reducing the amount of organic compounds and the recycled nitrates and nitrites, and produces a biogas prevailingly consisting of methane, accompanied by nitrogen and carbon dioxide, whereas ammonia is nitrified, and sulphides and sulphates are oxidized, in a subsequent aerobic high-speed treatment on inert substrates.

The present invention, therefore, proposes a process for biologically purifying a low-strength wastewater flow having feed streams and recycle streams and conducted at ambient temperature, comprising the steps of:

(a) treating the wastewater flow in an Upflow Anaerobic Sludge Blanket by an expanded mud bed anaerobic/anoxic biological procedure employing a thick bed of expanded mud and an overlying zone separating the wastewater flow into water and mud, the combined feed streams and recycled streams flowing at an upward speed of from 0,1 m hourly and 0,5 m hourly, the flow to said expanded mud comprising volumetric values in the order of magnitude of 1 kg COD per $m^3$ daily, the wastewater flow having a residence time of from 5 to 20 hours;

(b) treating the flow from said Upflow Anaerobic Sludge Blanket by an anaerobic biological procedure employing a fluidized bed of a fine inert support medium; and

(c) nitrifying and oxidizing the flow from said anaerobic biological procedure employing a fluidized bed of a fine inert support medium in an aerobic biological procedure employing an air flow through a fixed bed.

These steps, preceded by the usual preparatory riddling, sand and oil removal, will be described with reference to the flowsheet shown in the single Figure of the drawings. Step (a) replaces the usual solids settling step, and, by anaerobic/anoxic bioreaction on an expanded mud bed of U.A.S.B.(Upflow Anaerobic Sludge Blanket), settling, thickening and psychrophylic stabilization of heavy, phosphorus-rich sludges take place concurrently with the solubilization and biological removal of the organic substances, the so produced effluent being partially purified, having a low strength, and being stable and low in dry matter, a biogas being simultaneously produced, which has a high heating value.

The reactor 1 inside which said first reaction step is carried out is substantially constituted by a tank with a preferably rectangular cross-section, equipped with a system 2 for the regular distribution of the stream of the waste waters to be treated in the bottom area, e.g., with a set of parallel pipes at regular distances, and provided with perforations along their lower generatrices.

In the upper portion of the tank a device 3 is installed, which is used in order to collect the biogas generated by the anaerobic reaction. It can be constituted, e.g., by one or more metal biogas-collecting caps, which in correspondence of their lower edges are supported by supports 4, with which they form a labyrinth seal (not shown in the figure), which enables the sludge, but not the gas phase, to flow through.

At the top of the reactor a spillway device 5 is installed, which is constituted, e.g., by channels leading to the sump 6.

The reactor 1 is fed through the distributor 2 with the sewage to be treated delivered by means of the punp 7, and with the recycled matter coming from downstream equipment.

According to a different form of practical embodiment, the feed can be carried out by gravity.

Inside the reactor 1 two regions are established: a lower (9) region occupied by the bed of expanded mud (U.A.S.B. or biolytic region), wherein the above described anaerobic/anoxic reaction takes place, and the upper (B) region, wherein the separation by settling between the mud and the clarified liquid takes place.

The reaction proceeds at room temperature and the mud bed is maintained expanded by means of a flow rate distributed by the distributor 2, which maintains an upwards speed through the cross section of 1 comprised within the range of from 0.1 to 0.5 m/hour, and preferably of from 0.2 to 0.4 m/hour (including the recycled streams).

The average stay time of the fed sewage distributed by means of 2 is comprised within the range of from 5 to 20 hours, according to the concentration and the temperature of the same sewage, and preferably of from 8 to 16 hours.

Inasmuch as the charge fed to the treatment facility is not constant over time, but depends on the upstream users, and may also show wide oscillations - such as, e.g., it occurs in case of urban wastes - the preservation of the fluid-dynamic steady state is ensured with the recycle flow rates.

Inside the reactor 1 there is an expanded mud bed at a high concentration, more than 10 times higher than the concentration of the conventional active-sludge aerobic processes.

As a consequence thereof, in the layer of anaerobic mud a high ratio of the disposal yield to volume can be obtained; such a matter of fact makes it possible a volumetric charge of the order of 1 kg of $COD/m^3$.day to be adopted in the expanded mud bed, with a hydraulic stay time of the order of 10 hours, and at an age of the digestion mud older than 2-3 months. Under such operating conditions, more than 50% of volatile suspended solid matter is removed from the sewage, and a growth of biomass by degradation of the soluble organic substances smaller than 0.1 kg of dry matter per kg of removed COD is obtained.

Inside this bioreactor, the preliminary denitrification is simultaneously achieved, by using the organic substances contained in the raw sewage as the carbon and energy source for the specific microorganisms which reduce nitrites and nitrates, supplied by the recycle streams, to gaseous nitrogen compounds. Thus the effect of an integrated biological pre-denitrification is obtained, with a portion of the mixture nitrified in the end aerobic step being recycled to the initial anoxic step.

The biological stress to which the biological muds recycled in the anaerobic section are submitted, determines furthermore a partial release of phosphorus, which is subsequently assimilated in excess, and accumulated in the muds of the end aerobic step, with removals which can reach values as high as 90%.

From the reactor 1, the following streams are taken: a stream of clarified liquid by means of the spillways 5, the sump 6 and the pump 8 which feeds both the subsequent (b) step and the recycle stream to reactor 1, and a stream of muds, which is discharged in 9. As already mentioned, such muds result much more concentrated and in considerably reduced amounts (by 1/3-1/4) as compared to those which can be obtained by means of the conventional aerobic treatments.

The (b) step constitutes a finishing anaerobic biological treatment on a bed filled with a fine support, for the end removal of the polluting organic substances at room temperature.

Such a reaction is preferably carried out on a bed kept fluidized, thanks to high recycle rates, with an upwards flow, wherein inert materials of small-size particles - e.g., quartz sand, silicates, granular coal, sepiolite, glass, plastic material or ceramic material of suitable particle size - are used as a support for a

EP 0 302 545 B1

microbial biofilm which makes it possible the polluting substances (volatile acids) to be removed under anaerobic conditions, i.e., in the absence of oxygen, with a further amount of biogas rich in methane being obtained.

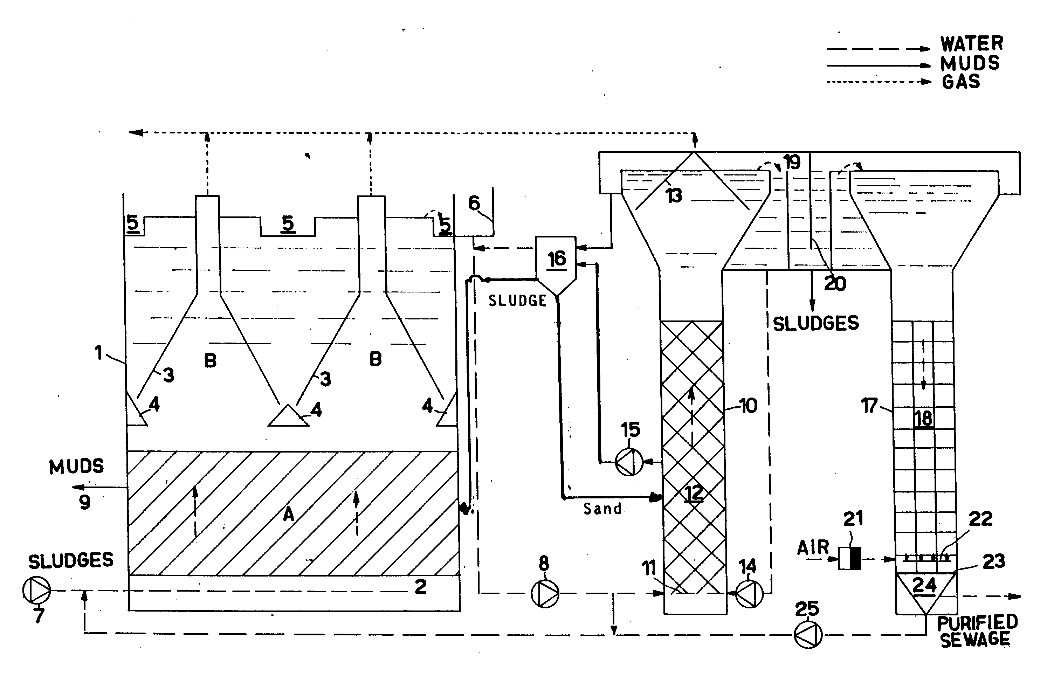

Referring to Figure 1, such a treatment is carried out inside the reactor 10, equipped with a perforated plate 11, or with equivalent devices for supporting the bed 12 and for distributing the upwards stream inside its interior.

Above the fluidized bed 12 an enlarged "C" area of clarification and a device 13 for collecting the further biogas produced - analogous to caps 3 - are installed.

Inside the reactor 10 a high upwards speed and a high contact efficiency are maintained, with organic charges of the order of 5-10 kg of $COD/m^3$.day and rising speeds comprised within the range of from 5 to 75 m/hour, maintained at a high value by recycling large amounts of treated water by means of the punp 14 (with recycle/feed ratios comprised within the range of from 4/1 to 8/1), and, together with a limited production of muds, which is smaller than 0.2 kg of dry matter per kg of removed COD, a purified effluent is obtained, but wherein reduced nitrogen compounds (as well as reduced sulphur compounds) are still present.

According to another form of practical embodiment, the finishing anaerobic biological treatment can be carried out, with the same fluid-dynamic steady-state conditions as above disclosed being maintained, by means of a downwards flow, and using a floating packing material, e.g., a small-size spongy material, pumice granulate, or the like.

In the long term, the production of further muds -even if in small amounts - could decrease the efficiency of the treatment due to the clogging of the support bed. Such a mud can be removed from the support by means of centrifugal separators, or by gravity. For exemplifying purposes, in the practical embodiment depicted in Figure 1, and referring to the use of sand as the inert material, such a separation is carried out by continuously drawing, at one or more levels of the bed 12, by means of pumps 15, a small amount of the suspension, and delivering it to a settling basin 16, which is substantially constituted by a cyclone, from whose bottom section the sand - heavier, and deprived of mud - is extracted and is recycled to the bed 12, whilst the mud remains in suspension, and leaves the settling basin from the top and is recycled to the reactor 1, or is discharged.

The hydraulic stay times inside the reactor 10 are very short, and are comprised within the range of from approximately 10 minutes to approximately one hour.

The (c) step is constituted by the aerobic treatment for the denitrification and the end oxidation of the various substances reduced in the preceding steps.

In the event of low polluting charges, the (b) step may result not necessary, and can hence be omitted, with the effluent treated in the (a) step being directly sent to the (c) step.

From said (c) step, a portion of the generated purified sewage and muds are recycled to the preceding steps for the denitrification and phosphorus removal by biological way.

Said end aerobic step requires very short contact times, and is carried out on a biological bed, preferably fixed and with a liquid stream flowing downwards in countercurrent to the air which is supplied from the bottom, either by a natural way (percolator), or by a forced way (submerged filter).

Such a biological bed is realized with inert supports - expanded clay, plastic materials, gravel, ceramic materials - with a rather large size, to which chemoautotrophic organisms adhere, which carry out, above all, the nitrification of ammonia (and the oxidation of the sulphides, and so forth), with dissolved oxygen concentrations higher than 2 mg/l.

The nitrified effluent, containing a small amount of muds, is recycled to the preceding anaerobic/anoxic steps, and the purified and clarified effluent is sent to the discharge, without any secondary settlings.

According to the form of practical embodiment depicted in Figure 1, the (c) step of aerobic treatment is carried out inside the reactor 17 occupied by the bed 18.

The clarified water coming from the reactor 10 flows from its upper spillways 19 through the separator 20, and comes to the top of the reactor 17, and flows downwards through said reactor in an aerobic environment, thanks to the flow of compressed air delivered by the compressor 21 and distributed by means of the diffusers 22 at a rate of from 5 to 20 $m^3$/hour per $m^3$ of bed 18.

The bed 18 is supported by a support 23, e.g., a perforated-plate support.

In the bottom region 24 a separation is achieved between the residual muds and the purified and clarified sewage, which is discharged, whilst the suspension of the muds is recycled by means of the pump 25 to the reactor 1.

On the contrary, in case the reactor 17 is given the structure of a percolator, the treatment air flows through it by natural draft.

4

The process according to the present invention offers considerable advantages over the conventional processes of aerobic treatment. Among them, the following are worth being mentioned:

- the sharp decrease in energy consumptions, which are more than halved;
- the reduction in mud production, which muds, moreover, are more stabilized and concentrated, and are hence easier to dispose of;
- the reduction in facility surface area;
- the production of high-heat-power biogas, at a rate of approximately 90% of carbon present in treated sewage.

The process according to the invention can be furthermore implemented in a simplified form in case the waste waters to be processed contain reduced amounts of pollutants and nutrient substances. Both the initial and the finishing anaerobic steps can be unified into one single, suitably adapted, anaerobic treatment step, of either type, preceded by a conventional settling treatment, or just by a microriddling treatment.

Example

The above disclosed process was tested on a 1:1 scale by means of a demonstration facility of 1000-1500 equivalent inhabitants, in order to purify a portion of the urban sewage generated by the town of Senigallia at room temperature.

The daily volume of sewage, which was treated in continuous, was comprised within the range of from approximately 200 $m^3$ to approximately 400 $m^3$, as a function of the pollutant loading, which was comprised within a minimum value of 80 kg of COD/day, up to a maximum of approximately 250 kg of COD/day. The campaign was carried out from September 1987 until April 1988.

The sewage entering the facility had the polluting characteristics as reported in Table 1, whilst at the end discharge, the purified sewage has an acceptable composition according to Table A Italian Law 319/1976 and following modifications and integrations, as reported in Table 2.

## Table_1
### CHARACTERISTICS OF ENTERING SEWAGE

|  |  | Average Value (8_months) | Minimum _Value_ | Maximum _Value_ |
|---|---|---|---|---|
| COD | mg/l | 350 | 200 | 630 |
| BOD$_5$ | mg/l | 140 | 80 | 240 |
| SST* | mg/l | 160 | 65 | 710 |

## Table_1 (cont.d)
### CHARACTERISTICS OF ENTERING SEWAGE

|  |  | Average Value (8_months) | Minimum _Value_ | Maximum _Value_ |
|---|---|---|---|---|
| SSV** | mg/l | 120 | 60 | 360 |
| TKN*** | mg/l | 40 | 15 | 80 |
| Total P | mg/l | 6 | 4 | 8 |
| SO$_4^=$ | mg/l | 90 | 30 | 275 |

| * | Total suspended solids |
|---|---|
| ** | Volatile suspended solids |
| *** | Total organic ammonia nitrogen |

Table 2

| "A" TABLE LAW 319-1976 | | |
|---|---|---|
| COD | mg/l | 160 |
| $BOD_5$ | mg/l | 40 |
| SST | mg/l | 80 |
| Settling solids | mg/l | 0.5 |
| $H_2S$ | mg/l | 1 |
| $SO_3^=$ | mg/l | 1 |
| $SO_4^=$ | mg/l | 1,000 |
| Total P | mg/l | 10 (0.5 in lakes) |
| $NH_4^+$ | mg/l | 15 (10 in lakes) |
| $N-NO_2^-$ | mg/l | 0.6 (10 in lakes) |
| $N-NO_3^-$ | mg/l | 20 (10 in lakes) |

Such results were obtained by means of a facility according to the the diagram shown in Figure 1, preceded by a treatment of microriddling to 0.5 mm, and with the following characteristics.

The reactor 1 is constituted by a concrete basin of square cross-section, with a capacity of 336 $m^3$ and a total useful height of 7 metres.

Of such volume, 236 $m^3$, corresponding to a height of 5 m, is occupied by the bed of expanded mud which constitutes the space destined to the initial anaerobic reaction.

The residual volume above it, of approximately 100 $m^3$, is destined to the clarification of the liquid.

From the above reported data, one can already observe that such an initial anaerobic reaction proceeds with an average charge of approximately 1 kg of COD/day per $m^3$ of reaction volume, which is a rather considerably high value.

The ratio of the charge of sewage to the recycled streams from the downstream sections was at maximum of approximately 1:1.

The stream distribution system 2 installed at the bottom of the reactor 1 is constituted by a toroidal pipe from which 8 horizontal pipes branch off, which are provided with 6-mm bores oriented downwards.

The spillway system 5 is constituted by channels with Thomson weir profile.

The mud level and mud concentration monitoring system inside the reactor 1 controls the flow rate distributed by 2, and the discharge of muds through 9.

The biogas collecting system is constituted by 2 metal caps.

The subsequent reactor 10 was fed, during the experimental run, with only 50% of effluent from reactor 1, whilst the residual 50% of such effluent was directly sent to the end step. The reactor 10 is constituted by a vertical metal cylinder with an inner diameter of 1,200 mm, and with a useful volume of approximately 8 $m^3$, containing 3 $m^3$ of stationary sand, surmounted by a settling area with an enlarged cross-section for the clarification, as well as by a cap of metal sheet for collecting the biogas, and by a Thomson-profile weir.

A circular settling basin 16 of 300 litres enables the dump muds to be separated from the sand, which is recycled.

During the test, inside the reactor 10 a recycled streams/feed stream ratio of from 5:1 to 10:1, and a rising speed of from 20 to 55 m/hour were maintained.

Inside the reactor 17, which has a shape and dimensions substantially equal as of reactor 10, air was fed by means of a lobe blower, whose delivery rate was of 10 $m^3$ of air per each $m^3$ of bed 18 and per hour.

No counter-washes resulted necessary.

The ratio between the stream recycled by means of the pump 25, and the discharged purified sewage was comprised within the range of from 1:1 to 4:1.

The bed 18 operates as a submerged filter and is constituted by 1-inch PVC supports, with a surface area of 230 $m^2/m^3$.

The average overall production of muds was of 0.14 kg of total solids per each kg of supplied COD, with a concentration of 7-10% of dry matter, constituted in its turn by approximately 50% of organic substances.

As regards the energy consumption, the process requires 0.16 kWh per each treated $m^3$.

The traditional aerobic treatments produce, with the other conditions being the same, amounts of muds which are from three- to four-fold larger, with a less than halved concentration of solids, in their turn containing a concentration of putrescible organic substances of 60-70% of the dry matter.

# EP 0 302 545 B1

Their energy content results approximately double.

## Claims

1. Process for biologically purifying a low-strength wastewater flow having feed streams and recycle streams and conducted at ambient temperature, comprising the steps of:

   (a) treating the wastewater flow in an Upflow Anaerobic Sludge Blanket by an expanded mud bed anaerobic/anoxic biological procedure employing a thick bed of expanded mud and an overlying zone separating the wastewater flow into water and mud, the combined feed streams and recycled streams flowing at an upward speed of from 0,1 m hourly and 0,5 m hourly, the flow to said expanded mud comprising volumetric values in the order of magnitude of 1 kg COD per $m^3$ daily, the wastewater flow having a residence time of from 5 to 20 hours;

   (b) treating the flow from said Upflow Anaerobic Sludge Blanket by an anaerobic biological procedure employing a fluidized bed of a fine inert support medium; and

   (c) nitrifying and oxidizing the flow from said anaerobic biological procedure employing a fluidized bed of a fine inert support medium in an aerobic biological procedure employing an air flow through a fixed bed.

2. Process according to Claim 1, wherein the wastewater flow from said fixed bed of said aerobic biological procedure (c) is downward and countercurrent relative to a flow of blown air and has a concentration of dissolved oxygen greater than 2 mg/l.

3. Process according to Claim 2, wherein the wastewater flow through said fixed bed has a residence time of one hour.

4. Process according to Claim 1, wherein said biological treatment of said aerobic biological procedure employs a fixed bed percolator, and the air used in said treatment flows by natural draft.

5. Process according to Claim 1, wherein a first portion of the flow from said fixed bed of stage (c) is discharged after a preliminary clarification and a second portion of said flow from said fixed bed of stage (c) is recycled to said Upflow Anaerobic Sludge Blanket of stage (a), the volume ratio of said first portion to said second portion being from 1 to 4.

6. Process according to Claim 1, wherein said fine support medium of stage (b) is fluidized by an upflow speed of from 15 m hourly to 55 m hourly, said upflow stream further comprising a volume ratio of said recycle streams to said feed strems of from 4:1 to 8:1.

7. Process according to Claim 6, wherein produced mud is removed from said fine inert support medium either by centrifugation or by gravity.

8. Process according to Claim 6, wherein the wastewater flow to said anaerobic biological procedure of stage (b) has a residence time shorter than one hour.

9. Process according to Claim 6, wherein the wastewater flow to said anaerobic biological procedure of stage (b) contains from 5 kg COD to 10 kg COD per $m^3$ of fluidized bed daily.

10. Process according to Claim 1, wherein said anaerobic biological procedure of stage (b) further employs floating packing materials and comprises a downward flow of the wastewater in a fluid dynamic steady state at a speed of from 15 m hourly to 55 m hourly, the volume ratio of said recycle streams to said feed streams being from 4:1 to 8:1.

## Revendications

1. Procédé de purification biologique d'un courant d'eaux usées faiblement chargées en polluants, présentant des courants d'alimentation et des courants de recyclage et mené à la température ambiante, comprenant les étapes consistant à :

8

(a) traiter le courant d'eaux usées dans une nappe de boue anaérobie ascendante, par une technique biologique anaérobie/anoxique à lit de boue développé, utilisant un lit épais de boue développé et une zone recouvrante de séparation du courant d'eaux usées en eau et boue, les courants d'alimentation et les courants de recyclage combinés s'écoulant vers le haut à une vitesse de 0,1 m par heure à 0,5 m par heure, le courant vers ladite boue développée présentant des valeurs volumétriques de l'ordre de grandeur de 1kg de DCO par m$^3$ et par jour, le temps de séjour du courant d'eaux usées étant de 5 à 20 heures,

(b) traiter le courant provenant de ladite nappe de boue anaérobie ascendante par une technique biologique anaérobie, utilisant un lit fluidisé d'un support fin inerte, et

(c) nitrifier et oxyder le courant provenant de ladite technique biologique anaérobie, utilisant un lit fluidisé d'un support fin inerte, par une technique biologique aérobie utilisant un courant d'air traversant un lit fixe.

2. Procédé selon la revendication 1, dans lequel le courant d'eaux usées dudit lit fixe de ladite technique biologique aérobie (c) est dirigé vers le bas, à contre-courant par rapport à un courant d'air insufflé, et a une concentration d'oxygène dissous supérieure à 2 mg/l.

3. Procédé selon la revendication 2, dans lequel le temps de séjour du courant d'eaux usées traversant ledit lit fixe est de 1 heure.

4. Procédé selon la revendication 1, dans lequel ledit traitement biologique de ladite technique biologique aérobie utilise un percolateur à lit fixe, et l'air utilisé dans ledit traitement s,écoule par tirage naturel.

5. Procédé selon la revendication 1, dans lequel une première partie du courant provenant dudit lit fixe de l'étape (c) est évacué après une clarification préliminaire et une seconde partie dudit courant provenant dudit lit fixe de l'étape (c) est recyclé vers ladite nappe de boue anaérobie ascendante de l'étape (a), le rapport en volume de ladite première partie à ladite deuxième partie étant de 1 à 4.

6. Procédé selon la revendication 1, dans lequel ledit support fin de l'étape (b) est fluidisé par un courant ascendant de vitesse 15 m par heure à 55 m par heure, ledit courant ascendant présentant en outre un rapport en volume desdits courants de recyclage auxdits courants d'alimentation de 4 : 1 à 8 : 1.

7. Procédé selon la revendication 6, dans lequel la boue produite est éliminée dudit support inerte fin par centrifugation ou par gravité.

8. Procédé selon la revendication 6, dans lequel le temps de séjour du courant d'eaux usées, dans ladite technique biologique anaérobie de l'étape (b), est inférieur à 1 heure.

9. Procédé selon la revendication 6, dans lequel le courant d'eaux usées pour ladite technique biologique anaérobie de l'étape (b) présente de 5 kg de DCO à 10 kg de DCO par m$^3$ de lit fluidisé et par jour.

10. Procédé selon la revendication 1, dans lequel ladite technique biologique anaérobie de l'étape (b) utilise en outre des matériaux de remplissage flottants et un courant descendant d'eaux usées, dans un état liquide dynamique stationnaire, ayant une vitesse de 15 m par heure à 55 m par heure, le rapport en volume desdits courants de recyclage auxdits courants d'alimentation étant de 4 : 1 à 8 : 1.

**Patentansprüche**

1. Verfahren zur biologischen Reinigung eines niedrigkonzentrierten Abwasserstroms, das Speiseströme und Rücklaufströme aufweist und bei Umgebungstemperatur ausgeführt wird, umfassend die folgenden Stufen:

(a) Behandeln des Abwasserstromes in einer Aufstrom-anaeroben Schlammdecke nach einer expandierten Schlammbett-anaeroben/anoxämischen biologischen Methode unter Anwendung eines dicken Bettes aus expandiertem Schlamm und einer Überlagerungszone, worin der Abwasserstrom in Wasser und Schlamm aufgetrennt wird, wobei die vereinigten Speiseströme und Rücklaufströme mit einer Aufwärtsgeschwindigkeit von 0,1 m/h und 0,5 m/h strömen, wobei die Strömung zu dem expandierten Schlamm Volumenwerte in der Größenordnung von 1 kg COD/m$^3$ .Tag aufweist und der Abwasserstrom eine Verweilzeit von 5 bis 20 Stunden aufweist;

(b) Behandeln des Stroms aus der Aufstrom-anaeroben Schlammdecke nach einem anaeroben biologischen Verfahren unter Einsatz eines Fließbettes aus einem feinen inerten Trägermedium; und

(c) Nitrifizieren und Oxidieren des Stroms aus dem anaeroben biologischen Verfahren unter Anwendung eines Fließbettes aus einem feinen inerten Trägermedium in einem aeroben biologischen Verfahren unter Anwendung eines Luftstroms durch ein Festbett.

2. Verfahren nach Anspruch 1, worin der Abwasserstrom aus dem Festbett der aeroben biologischen Methode (c) abwärts gerichtet und im Gegenstrom zu einem Fluß aus eingeblasener Luft erfolgt und eine Konzentration an gelöstem Sauerstoff von über 2 mg/l aufweist.

3. Verfahren nach Anspruch 2, worin der Abwasserstrom durch das Festbett eine Verweilzeit von einer Stunde aufweist.

4. Verfahren nach Anspruch 1, worin die biologische Behandlung der aeroben biologischen Methode einen Festbettperkolator vorsieht und die in dieser Behandlung verwendete Luft durch natürlichen Zug strömt.

5. Verfahren nach Anspruch 1, worin ein erster Teil der Strömung aus dem Festbett von Stufe (c) nach einer vorläufigen Klärung verworfen wird und ein zweiter Teil der Strömung aus dem Festbett von Stufe (c) zu der Aufstrom-anaeroben Schlammdecke von Stufe (a) zurückgeführt wird, wobei das Volumenverhältnis des ersten Anteils zum zweiten Anteil von 1 bis 4 beträgt.

6. Verfahren nach Anspruch 1, worin das feine Trägermedium von Stufe (b) durch eine Aufstrom-Geschwindigkeit von 15 m je Stunde bis 55 m je Stunde fluidisiert wird, welcher Aufstrom weiterhin ein Volumenverhältnis von Rücklaufströmen zu Speiseströmen von 4:1 bis 8:1 umfaßt.

7. Verfahren nach Anspruch 6, worin gebildeter Schlamm aus dem feinen inerten Trägermedium durch Zentrifugieren oder durch Schwerkraft abgetrennt wird.

8. Verfahren nach Anspruch 6, worin der Abwasserstrom zu der anaeroben biologischen Methode von Stufe (b) eine Verweilzeit von unter einer Stunde aufweist.

9. Verfahren nach Anspruch 6, worin der Abwasserstrom zu der anaerob biologischen Methode von Stufe (b) 5 kg COD bis 10 kg COD je m$^3$ Fließbett und Tag aufweist.

10. Verfahren nach Anspruch 1, worin die anaerobe biologische Methode von Stufe (b) zusätzlich schwimmende Packmaterialien vorsieht und einen Abwärtsstrom des Abwassers in einem fluiddynamischen stationären Zustand bei einer Geschwindigkeit von 15 m/h bis 55 m/h umfaßt, wobei das Volumenverhältnis der Rücklaufströme zu den Speiseströmen von 4:1 bis 8:1 ausmacht.

WATER
MUDS
GAS

EP 0 302 545 B1